Europäisches Patentamt

European Patent Office

Office européen des brevets

(19)

(11) Numéro de publication: **0 061 810**

**A2**

(12) **DEMANDE DE BREVET EUROPEEN**

(21) Numéro de dépôt: **82200341.4**

(22) Date de dépôt: **18.03.82**

(51) Int. Cl.³: **G 01 N 27/30**

(30) Priorité: **31.03.81 BE 204321**

(43) Date de publication de la demande:
**06.10.82 Bulletin 82/40**

(84) Etats contractants désignés:
**AT CH DE FR GB IT LI LU NL SE**

(71) Demandeur: **Bogard, Philippe**
**15, Avenue Général Jacques**
**B-1400 Nivelles(BE)**

(72) Inventeur: **Bogard, Philippe**
**15, Avenue Général Jacques**
**B-1400 Nivelles(BE)**

(74) Mandataire: **Pirson, Jean et al,**
**c/o Bureau GEVERS SA 7 rue de Livourne Bte 1**
**B-1050 Brussels(BE)**

(54) **Dispositif de détection à électrode à élément sensible solide et son procédé de préparation.**

(57) Dispositif de détection (1) à électrode à élément sensible solide (2) comprenant un support (3) sur lequel est fixé l'élément sensible (2) et un élément de connexion électrique (4) relié à l'élément sensible et électriquement isolé dudit milieu, caractérisé en ce que l'extrémité (6) de l'élément de connexion électrique reliée à l'élément sensible solide est une couche mince de matière électriquement conductrice intercalée entre le support électriquement isolant et la surface d'appui de l'élément sensible solide sur le support.

FIG. 1

EP 0 061 810 A2

Croydon Printing Company Ltd.

"Dispositif de détection à électrode à élément sensible solide et son procédé de préparation".

La présente invention est relative à un dispositif de détection à électrode à élément sensible solide, en particulier du type à membrane cristalline, comprenant un support, sur lequel est fixé l'élément sensible solide de l'électrode qui est destiné à entrer en contact avec un milieu à détecter, et un élément de connexion électrique relié à l'élément sensible solide et électriquement isolé dudit milieu. Elle concerne également un procédé de préparation d'un tel dispositif.

On connaît déjà des électrodes à élément sensible solide, en particulier du type appelé à membrane cristalline. Par exemple, dans le brevet aux Etats-Unis d'Amérique n° 3.824.170 est décrite une électrode comprenant un tube de support à l'extrémité duquel est fixée une membrane solide dont une face est destinée à entrer en contact avec le milieu à détecter et dont la face opposée est en contact avec un électrolyte enfermé dans le tube, un fil de connexion électrique étant également plongé dans l'électrolyte à l'autre extrémité du tube.

Ces électrodes présentent l'inconvénient de devoir faire intervenir un liquide enfermé dans le tube de support.

On connaît par ailleurs des électrodes du genre cité au préambule, du type appelé "à l'état totalement solide", qui ne comprennent plus d'électrolyte dans le tube de support et où le fil de connexion électrique est relié directement par une jonction solide à la face de la membrane cristalline qui se trouve à l'intérieur du tube (voir par exemple Orion Research, guide analytique, 6e éd., mars 1974 ou encore la demande de brevet en République Fédérale d'Allemagne publiée OS 2.002.676).

Ces électrodes présentent l'inconvénient d'une certaine fragilité du point de vue mécanique au niveau de la liaison entre le fil de connexion et la membrane solide de l'élément sensible. En vue d'obvier à cet inconvénient, on a également prévu de noyer le fil de connexion électrique et sa jonction solide avec la membrane cristalline dans une matière isolante (Voir demande de brevet en République Fédérale d'Allemagne publiée n° OS 1940 35 3).

Cependant toutes ces électrodes présentent l'inconvénient d'un contact électrique relativement réduit entre le fil de connexion et la membrane sensible, ce qui allonge le temps de réponse, et/ou d'un contact relativement complexe à réaliser, et donc coûteux. Par ailleurs, ces électrodes présentent un grand encombrement dû à la forme tubulaire du support, cet inconvénient apparaissant en particulier lorsqu'une détection et une mesure simultanée des différents ions présents dans le milieu à détecter nécessitent l'utilisation de plusieurs éléments sensibles différents, en conjonction avec un dispositif de mesure approprié permettant une lecture différentielle de tension, l'utilisation simultanée de plusieurs éléments sensibles permettant le dosage d'ions en présence d'autres ions interférents, soit par potentiométrie directe, soit par titrage potentiométrique direct ou en retour. Cependant, chaque tube de support des électrodes connues ne peut supporter qu'un seul élément sensible et dès qu'on doit utiliser trois ou quatre éléments sensibles différents, l'encombrement des électrodes devient vraiment gênant, et le coût de tels agencements devient prohibitif étant donné le coût de fabrication relativement élevé de chacune de ces électrodes.

La présente invention a par conséquent pour but d'éviter les inconvénients précités et notamment de mettre au point un dispositif de détection à électrode à élément sensible solide, présentant une grande solidité mécanique et un large contact électrique de l'élément de connexion avec son élément sensible ainsi qu'un faible encombrement même lors de la nécessité de la détection d'ions différents dans un même milieu. Ce dispositif doit être d'entretien nul et très facile à utiliser et son procédé de préparation doit être simple et peu coûteux.

On résout ces problèmes suivant l'invention par un dispositif tel que décrit au préambule, dans lequel l'extrémité de l'élément de connexion électrique reliée à l'élément sensible solide est une couche mince de matière électriquement conductrice intercalée entre le support électriquement isolant et la surface d'appui de l'élément sensible solide sur le support.

Suivant une forme de réalisation avantageuse de l'invention, le support est une plaque mince en matière chimiquement inerte, vis-à-vis du milieu à détecter, et électriquement isolante.

Suivant une forme très avantageuse de réalisation de l'invention, l'élément de connexion, y compris son extrémité reliée à l'élément sensible solide, est une piste métallique imprimée sur le support.

Suivant une forme perfectionnée de réalisation de l'invention, le dispositif comprend plusieurs électrodes dont les éléments sensibles et les éléments de connexion sont supportés sur la même plaque mince susdite.

Il est également prévu suivant l'invention un procédé de préparation d'un dispositif de détection tel que décrit au préambule qui comprend l'application de l'élément de connexion sur le support électriquement isolant de façon qu'une de ses extrémités soit sous la forme d'une couche mince conductrice et la fixation de l'élément sensible solide sur le support de façon que ladite couche mince soit intercalée entre le support et la surface d'appui de l'élément sensible sur le support.

Suivant un mode de réalisation de l'invention, le procédé comprend l'application de l'élément de connexion sur un support en forme de plaque mince.

Suivant un mode de réalisation avantageux de l'invention, la phase d'application comprend l'impression d'une piste métallique conductrice sur la plaque de support.

D'autres détails et particularités de l'invention ressortiront de la description donnée ci-après, à titre non limitatif et avec référence aux dessins annexés.

La figure 1 représente une vue de dessus, en perspective, d'une forme de réalisation de dispositif suivant l'invention.

La figure 2 représente une vue en coupe du dispositif illustré sur la figure 1, suivant la ligne II-II de celle-ci.

La figure 3 représente un schéma bloc d'un montage électronique susceptible d'être relié aux électrodes d'un dispositif suivant l'invention.

Sur les différentes figures, les éléments identiques ou analogues sont désignés par les mêmes références.

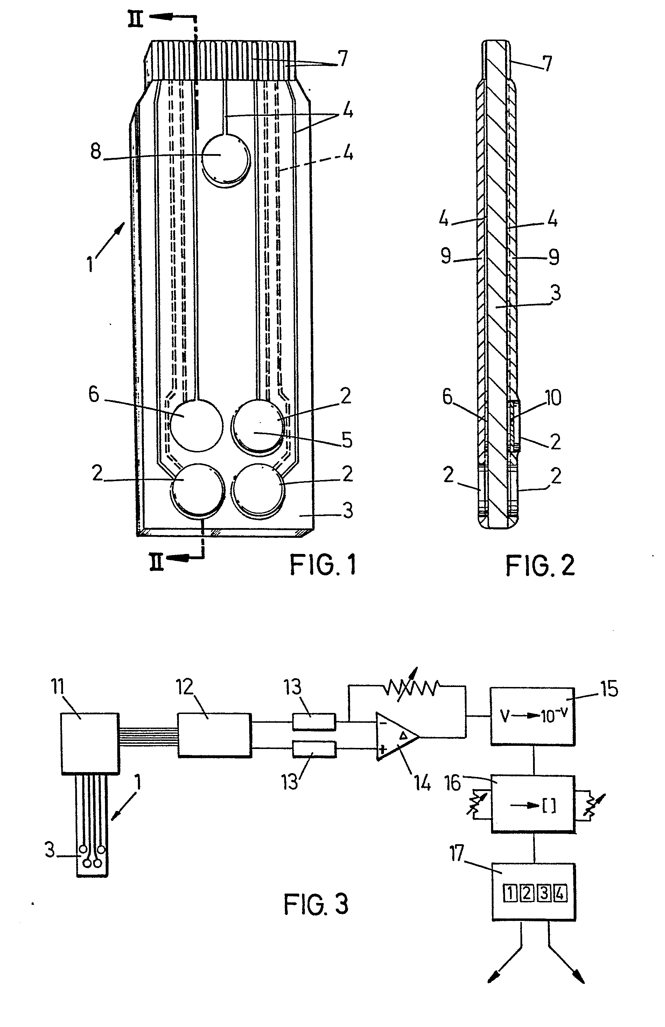

Sur les figures 1 et 2 est représenté un dispositif de détection 1 à électrode comprenant plusieurs électrodes, dont les éléments sensibles 2 sont des éléments de type à membrane cristalline, les électrodes étant du type appelé "totalement à l'état solide", un support unique 3 en forme de plaque mince et des éléments de connexion électrique 4 reliés chacun à un des éléments sensibles 2.

La plaque de support 3 est avantageusement constituée en une matière chimiquement inerte, vis-à-vis du ou des milieux à détecter, et électriquement isolante. Cette matière présente de préférence une grande résistance mécanique et une rigidité diélectrique très élevée. On peut citer à titre d'exemple d'une telle matière une résine époxyde stratifiée.

Ainsi qu'il ressort des figures 1 et 2, les éléments sensibles 2 sont des pastilles approximativement cylindriques, courantes dans le commerce, dont une première face frontale, qui porte la référence 5, est seule destinée à entrer en contact avec le milieu à détecter et dont la deuxième face frontale, opposée à la face 5, est la surface d'appui de l'élément sensible 2 sur la plaque de support 3.

Les pastilles des éléments sensibles 2 sont constituées d'un sel minéral ou organique ou d'un mélange de tels sels, selon par exemple les ions à détecter dans le milieu. On peut par exemple prévoir sur la même plaque de support que chaque pastille soit différente des autres en vue d'une lecture différentielle de la tension. Les pastilles prévues peuvent par exemple être à base de $Ag_2S$, de $Ag_2S/CuS$, de $Ag_2S/CdS$, de $Ag_2S/PbS$, etc....... Leur diamètre et leur épaisseur sont largement variables, par exemple de 1 à 20 mm et respectivement de 0 à 5 mm.

Dans l'exemple illustré, chaque élément de connexion 4 est une piste métallique imprimée sur la plaque de support et chaque piste présente une extrémité 6 élargie.(Voir cette extrémité 6 sur la figure 1 où une pastille n'a pas été appliquée sur une des pistes conductrices du dispositif de détection illustré). Un élément sensible 2 est destiné à être fixé sur le support 3 de façon que cette extrémité 6 soit intercalée entre la deuxième face frontale précitée de la pastille et la plaque de support, sous la forme d'une couche mince conductrice. Avantageusement, l'extrémité 6 est façonnée de manière à être en contact avec la totalité de cette deuxième face frontale de la pastille. Cette grande surface de contact entre l'élément sensible 2 et son élément de connexion 4 offre l'avantage d'une grande résistance mécanique de la liaison élément sensible-élément de connexion et d'une réduction importante du temps de réponse de l'électrode. Les pistes métalliques des éléments de connexion sont avantageusement des pistes à base de cuivre, revêtues éventuellement d'un film d'or ou d'argent sur la totalité de leur longueur ou en tout cas sur l'extrémité 6 et l'extrémité opposée 7 destinée à être reliée à un dispositif de mesure, représenté de manière schématique sur la figure 3, et cela en vue de faciliter le contact électrique et d'éviter une oxydation.

Comme seule la face 5 de chacun des éléments sensibles 2 doit être en contact avec le milieu à détecter, une matière électriquement isolante 9 est prévue pour entourer les pastilles et recouvrir la totalité de la plaque de support 3 et des éléments de connexion 4, à l'exception de leur extrémité 7 à relier au dispositif de mesure. Cette matière peut par exemple avantageusement être une résine inerte vis-à-vis du milieu à détecter, polymère.

Les éléments sensibles 2 peuvent être fixés sur l'extrémité 6 des pistes conductrices à l'aide uniquement de cette matière isolante 9. On peut aussi prévoir, entre la couche mince métallique de l'extrémité 6 et l'élément sensible 2,

8

une couche de matière adhésive électriquement conductrice 10, par exemple en vernis conducteur à l'Ag (v. figure 2).

Ainsi qu'il ressort particulièrement bien de la figure 2, des éléments sensibles 2 peuvent être prévus sur les deux faces de la plaque de support 3 ce qui permet de grouper à l'extrémité de cette plaque à plonger dans le milieu à détecter un grand nombre d'éléments sensibles 2, dans le cas illustré jusqu'à 8, bien qu'il soit évident que ce nombre n'est pas limitatif. Le dispositif suivant l'invention permet ainsi l'utilisation simultanée de plusieurs électrodes conjointement dans le même milieu en vue d'effectuer une lecture différentielle de tension et de permettre ainsi la détection de la présence d'ions différents dans un même milieu, et cela sans les problèmes dus à l'encombrement des électrodes actuellement sur le marché.

Il faut par ailleurs noter qu'une électrode de référence 8 peut aisément être éventuellement prévue à l'extrémité de la plaque de support 3 qui ne doit pas être plongée dans le milieu à détecter, la fixation de son élément sensible et l'agencement de son élément de connexion étant par ailleurs les mêmes que pour les autres électrodes.

Ainsi qu'il ressort de la figure 3, le dispositif de détection 1 suivant l'invention peut être raccordé à un dispositif de mesure, l'extrémité opposée aux éléments sensibles de la plaque de support 3 pouvant être enfoncée dans un préamplificateur 11 adapté pour entrer en contact avec les extrémités 7 des pistes conductrices qui, là, sont à nu.

Le préamplificateur 11 adapte l'impédance d'entrée et présente par exemple $10^6$ M$\Omega$ à l'entrée et 100 $\Omega$ à la sortie. Le préamplificateur est relié à un sommateur 12 qui additionne ou soustrait les signaux en provenance des différents éléments sensibles. Les signaux sont appliqués à des suiveurs de tension 13 ou tampons avant d'être couplés à un amplificateur d'instrumentation 14 à gain variable. Un convertisseur 15 en mode exponentiel permet une linéarisation de la courbe de réponse obtenue à la sortie de l'amplificateur 14. Un convertisseur en concentration 16 permet un réglage du niveau O de la concentration et un ajustage du facteur de pente d'amplification. Enfin les signaux parviennent à un dispositif d'affichage numérique 17 à mémorisation qui dispose de sorties qui permettent entre autres de connecter un enregistreur ou une imprimante commandée par un temporisateur.

Le procédé de préparation d'un dispositif de détection suivant l'invention va être décrit d'une manière détaillée à l'aide d'un exemple de réalisation illustratif et non limitatif.

Exemple.

Impression photographique du dessin souhaité des pistes sur une plaquette en résine époxyde, revêtue d'une couche de cuivre et d'une couche photosensible, à l'aide d'une lampe aux ultraviolets.

Elimination de la couche photosensible non exposée aux rayons ultraviolets et attaque du cuivre mis à nu à l'aide d'un bain de décapage au perchlorure de Fe ou au persulfate d'ammonium, puis dissolution de la couche photosensible durcie par l'exposition aux rayons ultraviolets.

Dépôt d'une couche mince d'Ag sur la piste de Cu imprimée par un procédé quelconque, tel qu'un dépôt par voie chimique pure, comme une oxydo-réduction, ou par voie électrolytique, avec par exemple un bain au cyanure , un recouvrement par un vernis conducteur à l'Ag, un dépôt par évaporation d'Ag sous vide ou par pulvérisation cathodique, etc......

Le cas échéant, on peut alors former en plus un interface Ag/AgCl par formation d'une couche d'AgCl sur l'Ag, par voie chimique ou électrolytique.

Pose d'une pastille sensible sur chaque extrémité 6 des pistes imprimées, sur la couche mince d'AgCl ou d'Ag et collage éventuel au moyen d'un vernis conducteur à l'Ag.

Application d'une résine isolante qui recouvre les pistes conductrices et le bord des pastilles, tout en laissant à nu la surface des pastilles opposée à leur face en appui sur la plaque de support.

Polissage de cette face sur papier métallographique à grains très fins et finition au lait d'alumine ou à la pâte diamantée ( $< 1$ $\mu$).

Tout en offrant les avantages de facilité d'emploi, d'une grande solidité mécanique et électrique, d'un faible encombrement, d'un coût d'utilisation et de fabrication très faible, d'une simplicité de construction et d'un entretien nul, ce dispositif de détection présente des électrodes dont les performances sont au moins égales, sinon supérieures à celles connues, et cela en particulier grâce à la grande surface de contact entre la pastille et son élément de connexion.

Comme performances des électrodes du dispositif de détection suivant l'invention, on peut indiquer celles données ci-dessous, en comparaison d'une électrode commerciale courante au sulfure d'Ag. (TSENG k.c. et GUTKNECHT W.F., Anal. Chem. _47_ (1975) 2317).

| Réponse vis-à-vis de la cystéine: | Electrode au sulfure d'Ag courante dans le commerce | Electrode du dispositif suivant l'invention |
|---|---|---|
| Limite de linéarité (moles/litre) | $1.10^{-4}$ | $3.10^{-5}$ |
| Coefficient de corrélation | $\backsim 1$ | 0,9998 |
| Dérive (mV/24h) | min 1 – max 5 | $<1$ |
| Temps de réponse | 99 minutes | 99 minutes |

Il doit être entendu que la présente invention n'est en aucune façon limitée à la forme de réalisation décrite ci-dessus et que bien des modifications peuvent y être apportées sans sortir du cadre du présent brevet.

On peut par exemple envisager, au lieu d'une plaque de support plane, un support à surface courbe ou même éventuellement tubulaire, comme dans le cas des électrodes actuelles, pour autant qu'entre la surface périphérique des pastilles en appui sur le tube de support et ce dernier soit intercalée une couche mince conductrice de l'élément de connexion.

On peut envisager, au lieu de pistes conductrices imprimées sur le support, uniquement un fil conducteur collé sur le support ou appliqué d'une autre manière et largement aplati à son extrémité 6.

On peut aussi ne prévoir qu'une seule pastille sur le support, pour obtenir un dispositif à électrode unique au lieu d'un dispositif à electrodes multiples.

Il doit également être entendu que les éléments sensibles peuvent présenter d'autres formes que celles des pastilles cylindriques actuellement en usage.

On peut avantageusement prévoir éventuellement des pistes conductrices à base de métaux différents en fonction de la nature de l'élément sensible à y fixer.

REVENDICATIONS.

1. Dispositif de détection (1) à électrode à élément sensible solide (2), en particulier du type à membrane cristalline, comprenant un support (3), sur lequel est fixé l'élément sensible solide de l'électrode qui est destiné à entrer en contact avec un milieu à détecter, et un élément de connexion électrique (4) relié à l'élément sensible solide (2) et électriquement isolé dudit milieu, caractérisé en ce que l'extrémité de l'élément de connexion électrique (4) reliée à l'élément sensible solide (2) est une couche mince (6) de matière électriquement conductrice intercalée entre le support (3) électriquement isolant et la surface d'appui de l'élément sensible solide (2) sur le support (3).

2. Dispositif suivant la revendication 1, caractérisé en ce que le support (3) est une plaque mince en matière chimiquement inerte, vis-à-vis du milieu à détecter, et électriquement isolante.

3. Dispositif suivant la revendication 2, caractérisé en ce que l'élément sensible solide (2) est une pastille dont seule une première face frontale (5) est destinée à entrer en contact avec le milieu à détecter et dont la deuxième face frontale est ladite surface d'appui de l'élément sensible (2) sur la plaque de support (3).

4. Dispositif suivant l'une ou l'autre des revendications 2 et 3, caractérisé en ce que l'élément de connexion (4), y compris son extrémité (6) reliée à l'élément sensible solide (2), est une piste métallique imprimée sur le support (3).

5. Dispositif suivant l'une quelconque des revendications 1 à 4, caractérisé en ce que ladite couche mince électriquement conductrice (6) intercalée entre le support (3) et la surface d'appui de l'élément sensible solide (2) sur le support a une forme telle qu'elle est en contact avec la totalité de cette surface d'appui.

6. Dispositif suivant l'une quelconque des revendications 1 à 5, caractérisé en ce que l'élément sensible solide (2) est relié à la couche mince électriquement conductrice (6), inter-calée, à l'aide d'une matière adhésive électriquement conductrice (10).

7. Dispositif suivant l'une quelconque des revendications 3 à 6, caractérisé en ce qu'une matière de revêtement (9), électriquement isolante et chimiquement inerte vis-à-vis du milieu, isole de ce milieu l'élément de connexion électrique (4) et l'élément sensible solide (2) à l'exception de ladite première face frontale (5) de ce dernier.

8. Dispositif suivant l'une quelconque des revendications 2 à 7, caractérisé en ce qu'il comprend plusieurs électrodes dont les éléments sensibles (2) et les éléments de connexion (4) sont supportés sur la même plaque mince (3) susdite.

9. Dispositif suivant la revendication 8, caractérisé en ce que des éléments sensibles (2) et leurs éléments de connexion (4) sont agencés sur les deux faces de ladite plaque mince (3).

10. Dispositif suivant l'une ou l'autre des revendications 8 et 9, caractérisé en ce que la plaque de support (3) présente les éléments sensibles (2) susdits groupés à une de ses extrémités qui est destinée à être plongée dans le milieu à détecter et l'élément sensible (2) d'une électrode de référence à l'autre extrémité de la plaque qui n'est pas plongée dans ce milieu.

11. Procédé de préparation d'un dispositif de détection à électrode à élément sensible solide, en particulier du type à membrane cristalline, comprenant un support, sur lequel est fixé l'élément sensible solide de l'électrode qui est destiné à entrer en contact avec un milieu à détecter, et un élément de connexion électrique relié à l'élément sensible solide et électriquement isolé dudit milieu, caractérisé en ce qu'il comprend l'application de l'élément de connexion sur le support électriquement isolant de façon qu'une de ses extrémités soit sous la forme d'une couche mince conductrice et la fixation de l'élément sensible solide sur le support de façon que ladite couche mince soit intercalée entre le support et la surface d'appui de l'élément sensible sur le support.

12. Procédé suivant la revendication 11, caractérisé en ce qu'il comprend l'application de l'élément de connexion sur un support en forme de plaque mince.

13. Procédé suivant la revendication 12, caractérisé en ce que la phase d'application comprend l'impression d'une piste métallique conductrice sur la plaque de support.

14. Procédé suivant la revendication 13, caractérisé en ce que la fixation de l'élément sensible solide sur le support comprend la pose de l'élément sensible sur l'extrémité susdite de l'élément de connexion électrique et le recouvrement par une matière électriquement isolante de la piste conductrice découverte et des bords de l'élément sensible non destinés à entrer en contact avec le milieu à détecter.

15. Procédé suivant la revendication 14, caractérisé en ce qu'il comprend en outre le collage de l'élément sensible solide sur l'extrémité susdite de l'élément de connexion par une matière adhésive électriquement conductrice.

16. Procédé suivant l'une quelconque des revendications 11 à 15, caractérisé en ce que l'extrémité susdite de l'élément de connexion est façonnée de manière qu'elle soit en contact avec la totalité de la surface d'appui de l'élément sensible sur le support.

0061810

FIG. 1

FIG. 2

FIG. 3